# EUROPÄISCHE PATENTSCHRIFT

(11) **EP 1 990 329 B1**
(45) Veröffentlichungstag und Bekanntmachung des Hinweises auf die Patenterteilung: **01.12.2010**
(21) Anmeldenummer: 07009128.5
(22) Anmeldetag: 07.05.2007
(51) Int. Cl.: C04B 35/468, C04B 35/50, C23C 28/00, C23C 30/00, C23C 4/08, C23C 4/10

(54) **Zweilagiges Schichtsystem mit Pyrochlorphase und Oxiden**
Two-layered system with pryochlorphases and oxides
Système de couche à double épaisseur comportant une phase pyrochlore et des oxydes

(43) Veröffentlichungstag der Anmeldung: 12.11.2008
(60) Teilanmeldung: 10004936.0
(73) Patentinhaber: SIEMENS AKTIENGESELLSCHAFT, 80333 München (DE)
(72) Erfinder: Subramanian, Ramesh, Dr., 10777 Berlin (DE)

(56) Entgegenhaltungen:
- EP-A- 1 321 542
- EP-A- 1 783 248
- EP-A- 1 790 754
- EP-A- 1 806 432
- EP-A- 1 806 435
- WO-A-2005/019370

## Beschreibung

Die Erfindung betrifft ein Schichtsystem mit Pyrochloren gemäß Anspruch 1.

Ein solches Schichtsystem weist ein Substrat mit einer Metalllegierung auf der Basis von Nickel oder Kobalt auf. Derartige Erzeugnisse dienen vor allem als Bauteil einer Gasturbine, insbesondere als Gasturbinenschaufeln oder Hitzeschilde. Die Bauteile sind einem Heißgasstrom von aggressiven Verbrennungsgasen ausgesetzt. Daher müssen sie hohen thermischen Belastungen Stand halten können. Des Weiteren ist es erforderlich, dass diese Bauteile oxidations- und korrosionsbeständig sind. Vor allem an bewegliche Bauteile, z. B. Gasturbinenschaufeln, aber auch an statische Bauteile sind fernerhin mechanische Anforderungen zu stellen. Die Leistung und der Wirkungsgrad einer Gasturbine, in der heißgasbelastbare Bauteile Verwendung finden, steigen mit zunehmender Betriebstemperatur. Um einen hohen Wirkungsgrad und eine hohe Leistung zu erzielen, werden durch die hohen Temperaturen besonders belastete Komponenten der Gasturbinen mit einem keramischen Werkstoff beschichtet. Dieser wirkt als Wärmedämmschicht zwischen dem Heißgasstrom und dem metallischen Substrat.
Vor dem aggressiven Heißgasstrom wird der metallische Grundkörper durch Beschichtungen geschützt. Dabei weisen moderne Bauteile zumeist mehrere Beschichtungen auf, die jeweils spezifische Aufgaben erfüllen. Es liegt somit ein Mehrschichtsystem vor.
Da Leistung und Wirkungsgrad von Gasturbinen mit zunehmender Betriebstemperatur steigen, wurde immer wieder versucht, durch Verbesserung des Beschichtungssystems eine höhere Leistungsfähigkeit von Gasturbinen zu erzielen.

Die EP 0 944 746 B1 offenbart die Verwendung von Pyrochloren als Wärmedämmschicht. Jedoch sind für den Einsatz eines Materials als Wärmedämmschicht nicht nur gute wärmedämmende Eigenschaften notwendig, sondern auch eine gute Anbindung an das Substrat.

Die EP 0 992 603 A1 offenbart eine Wärmedämmschichtsystem aus Gadoliniumoxid und Zirkonoxid, das keine Pyrochlorstruktur aufweisen soll.

Es ist daher Aufgabe der Erfindung ein Schichtsystem aufzuzeigen, das gute wärmedämmende Eigenschaften sowie eine gute Anbindung an das Substrat und damit eine lange Lebensdauer des gesamten Schichtsystems aufweist.

Der Erfindung liegt die Erkenntnis zugrunde, dass das gesamte System als Einheit betrachtet werden muss und nicht einzelne Schichten oder einzelne Schichten untereinander isoliert von einander betrachtet und optimiert werden dürfen, um eine lange Lebensdauer zu erzielen.

Die Aufgabe wird gelöst durch ein Schichtsystem gemäß Anspruch 1.

In den Unteransprüchen sind weitere vorteilhafte Maßnahmen aufgeführt, die beliebig in vorteilhafter Art und Weise kombiniert werden können.

Es zeigen
- Figur 1: ein erfindungsgemäßes Schichtsystem,
- Figur 2: eine Seite von Superlegierungen,
- Figur 3: eine perspektivische Ansicht einer Turbinenschaufel,
- Figur 4: eine perspektivische Ansicht einer Brennkammer,
- Figur 5: eine Gasturbine.

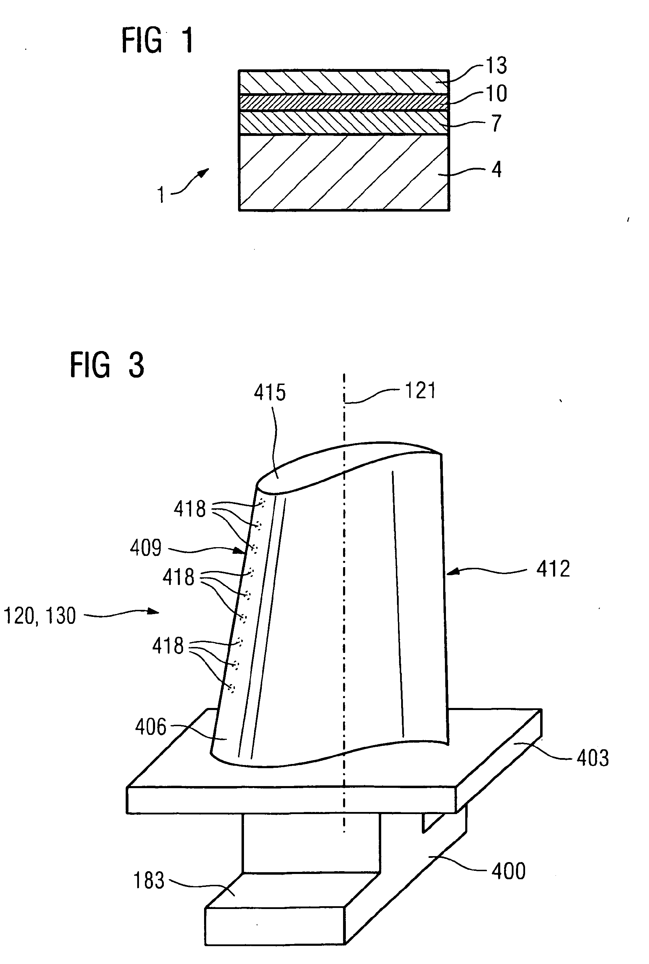

Figur 1 zeigt ein erfindungsgemäßes Schichtsystem 1.

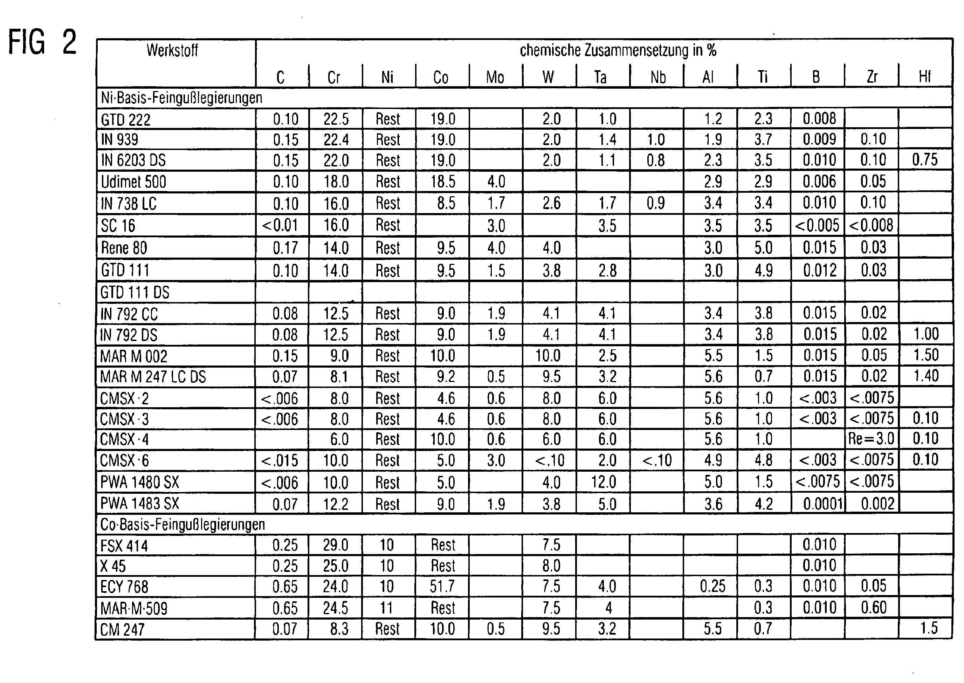

Das Schichtsystem 1 weist ein metallisches Substrat 4 auf, das für Bauteile bei hohen Temperaturen einer nickel- oder kobaltbasierten Superlegierung (Fig. 2) aufweist.
Vorzugsweise direkt auf dem Substrat 4 ist eine metallische Anbindungsschicht 7 des Typs NiCoCrALX vorhanden, die vorzugsweise (11 - 13)wt% Kobalt, (20 - 22)wt% Chrom, (10,5 - 11,5)wt% Aluminium, (0,3 - 0,5)wt% Yttrium, (1,5 - 2,5)wt% Rhenium und Rest Nickel oder vorzugsweise (24 - 26)wt% Kobalt, (16 - 18)wt% Chrom, (9,5 - 11)wt% Aluminium, (0,3 - 0,5)wt% Yttrium, (1 - 1,8)wt% Rhenium und Rest Nickel aufweist.
Insbesondere besteht die Anbindungsschicht 7 aus einer dieser Legierungen.

Auf dieser metallischen Anbindungsschicht 7 ist vorzugsweise bereits vor dem Aufbringen weiterer keramischer Schichten eine Aluminiumoxidschicht entstanden oder während des Betriebs entsteht eine solche Aluminiumoxidschicht (TGO).

Auf der metallischen Anbindungsschicht 7 oder auf der Aluminiumoxidschicht (nicht dargestellt) oder auf dem Substrat 4 ist eine innere vollständig oder teilweise stabilisierte Zirkonoxidschicht keramische Schicht 10, vorhanden.

Vorzugsweise wird Yttrium-stabilisiertes Zirkonoxid verwendet, wobei vorzugsweise 6wt% - 8wt% Yttrium verwendet wird. Ebenso kann Kalziumoxid, Ceroxid und/oder Hafniumoxid zur Stabilisierung von Zirkonoxid verwendet werden.
Das Zirkonoxid wird vorzugsweise als plasmagespritzte Schicht aufgetragen, kann vorzugsweise auch als kolumnare Struktur mittels Elektronenstrahlverdampfen (EBPVD) aufgebracht werden.

Auf der stabilisierten Zirkonoxidschicht 10 ist eine äußere, insbesondere die äußerste keramische Schicht 13 (einem Heißgas direkt ausgesetzt) aufgebracht, die zum größten Teil aus einer Pyrochlorphase besteht, also mindestens 92wt% einer Pyrochlorphase aufweist, die vorzugsweise entweder Gadoliniumhafnat, insbesondere Gd₂Hf₂O₇, oder Gadoliniumzirkonat, insbesondere Gd₂Zr₂O₇, aufweist, insbesondere daraus besteht.

Vorzugsweise besteht die äußere Schicht 13 zu 100wt% aus einer der beiden Pyrochlorphasen. Amorphe Phasen, reines GdO₂, reines ZrO₂ oder reines HfO₂, Mischphasen aus GdO₂ und ZrO₂ bzw. HfO₂, die nicht die Pyrochlorphase aufweisen, sind in diesem Fall unerwünscht und zu minimieren.

Vorzugsweise weist die äußerste keramische Schicht 13 aber bis 8wt% eines Sekundäroxids auf, insbesondere 0,5wt% bis 8wt%, ganz insbesondere 1wt% bis 8wt%.
Das Sekundäroxid wird in diesem Fall bewusst zu dem Pulver für die keramische Schicht 13 oder zu der keramischen Schicht 13 hinzugefügt, liegt also deutlich über der messtechnischen Nachweisgrenze des Sekundäroxids, weist also mindestens den doppelten Wert der Nachweisgrenze des Sekundäroxids auf.

Das Sekundäroxid ist vorzugsweise in der Schicht 13 verteilt, insbesondere homogen verteilt.
Das Sekundäroxid liegt vorzugsweise als Oxid (Sekundärphase) vor.

Insbesondere im Falle von Gadoliniumzirkonat als Pyrochlorphase weist die keramische Schicht 13 vorzugsweise ein Sekundäroxid mit einem Anteil von 1,5wt% bis 2,5wt%, ganz insbesondere mit 2wt%, insbesondere Hafniumoxid auf. Das Hafniumoxid kann vorzugsweise als reines Oxid oder als Mischkristallbildner in der Pyrochlorphase vorliegen. Ebenso kann das Sekundäroxid vollständig ein Mischkristall mit der Pyrochlorphase bilden.

Insbesondere im Falle von Gadoliniumhafnat weist die keramische Schicht 13 vorzugsweise ein Sekundäroxid mit einem Anteil von 5wt% bis 7wt%, insbesondere mit einem Anteil von 6wt%, insbesondere Zirkonoxid auf.
Das Zirkonoxid kann vorzugsweise als reines Oxid vorliegen oder ganz oder teilweise ein Mischkristall bilden.

Optional kann die keramische Schicht 13 bis 0,05wt% Siliziumoxid, bis 0,1wt% Kalziumoxid, bis 0,1wt% Magnesiumoxid, bis 0,1wt% Eisenoxid, bis 0,1w% Aluminiumoxid und bis 0,08wt% Titanoxid als Sinterhilfe aufweisen. Die Sinterhilfen fördern den Zusammenhalt der Schicht beim Auftragen und beim späteren Einsatz bei hohen Temperaturen. Vorzugsweise weist die keramische Schicht 13 keine weiteren Sinterhilfen auf.

Insbesondere weist das Schichtsystem für die keramische Schicht 13 nur eine Pyrochlorphase auf.

Um eine Anpassung der Ausdehnungskoeffizienten der äußeren keramischen Schicht an die unterliegenden Schichten oder an das Substrat zu erreichen, können auch nur zwei Pyrochlorphasen vorhanden sein, die dann vorzugsweise aus einem Gemisch Gadoliniumzirkonat und Gadoliniumhafnat gebildet werden.

Ebenso vorzugsweise kann als einzige Pyrochlorphase ein Mischkristall verwendet werden, insbesondere Gd₂(HfₓZr_{y})O₇ mit x+y ≈ 2, da hier durch die Mischung von verschiedenen Elementen eine Diffusion nicht mehr gegeben ist und eine hohe Phasenstabilität erreicht wird.
Abweichungen von der Stöchiometrie A₂B₂O₇ können immer auftreten oder bewusst eingestellt werden.

Ebenso kann ein Pulvergemisch aus zwei Pulvern, das jeweils eine andere Pyrochlorphase aufweist, verwendet werden. Hier wird insbesondere Gadoliniumzirkonat und Gadoliniumhafnat verwendet.

Vorzugsweise ist in der keramischen Schicht 13 nur ein Sekundäroxid vorhanden. Dies ist insbesondere von Vorteil, wenn nur eine Pyrochlorphase vorhanden ist.

Jedoch können auch mehrere oder auch nur zwei Sekundäroxide verwendet werden, um eine Anpassung der Ausdehnungskoeffizienten zu erreichen.

Vorzugsweise besteht das Schichtsystem aus dem Substrat 4, der metallischen Anbindungsschicht 7, optional der TGO, der inneren keramischen Schicht 10 und der äußeren keramischen Schicht 13.
Vorzugsweise besteht die äußere keramische Schicht 13 aus der/den Pyrochlorphasen und Sekundäroxiden ohne Sinterhilfen.

Vorzugsweise besteht die keramische Schicht 13 aus Pyrochloren, insbesondere Gadoliniumhafnat und/oder Gadoliniumzirkonat und/oder Sekundäroxiden, insbesondere Hafniumoxid und/oder Zirkonoxid.

Vorzugsweise besteht die äußere keramische Schicht 13 aus der/den Pyrochlorphasen und Sekundäroxiden ohne Sinterhilfen.

Bevorzugt werden aber die Kombinationen Sekundäroxide und Sinterhilfen
- Gadoliniumzirkonat + Hafniumoxid
- Gadoliniumhafnat + Zirkonoxid
- oder die Mischung (als Pulvermischung oder als Mischkristall) daraus.

Gadoliniumhafnat weist als Pulver für die Schicht 13 43wt% bis 50wt%, vorzugsweise 44,7wt% bis 47,7wt% Gadoliniumoxid und Rest Hafniumoxid und optional die Sekundäroxide, vorzugsweise Zirkonoxid, und optional die Sinterhilfen auf. Gadoliniumzirkonat weist als Pulver 56wt% bis 63wt%, vorzugsweise 58wt% bis 61wt% Gadoliniumoxid und Rest Zirkonoxid und optional die Sekundäroxide, vorzugsweise Hafniumoxid, und optional Sinterhilfen auf.

Beim Mischkristall oder beim Pulvergemisch werden diese Anteile gemäß dem Verhältnis von Hf und Zr vorhanden sein.

Beim Kurzzeiteinsatz und/oder höheren Temperaturen wird die äußere Schicht 13 mit den besseren Wärmedämmeigenschaften dünner ausgeführt als die innere Schicht 10, die schlechtere Wärmedämmeigenschaften aufweist.
Die Schichtdicke der inneren Schicht 10 beträgt zwischen 60% und 90% der Gesamtschichtdicke von innerer Schicht 10 und äußerer Schicht 13.

Vorzugsweise liegt die Schichtdicke der inneren Schicht 10 zwischen 60% und 80% der Gesamtschichtdicke.
Ebenso vorteilhaft ist es, wenn die Schichtdicke der inneren Schicht 10 60% bis 70% der Gesamtschichtdicke aufweist. Ebenso vorzugsweise ist es, wenn die Schichtdicke der inneren Schicht 10 zwischen 70% und <100% oder zwischen 70% und 90% der Gesamtschichtdicke beträgt.
Wenn der Anteil der inneren Schicht 10 an der Gesamtschichtdicke zwischen 70% und 80% liegt, werden ebenso vorteilhafte Ergebnisse erzielt.
Ebenso vorteilhaft ist es, wenn die Schichtdicke der inneren Schicht 10 80% bis 90% der Gesamtschichtdicke aufweist. Ebenso vorzugsweise ist es, wenn die Schichtdicke der inneren Schicht 10 zwischen 90% und <100% der Gesamtschichtdicke beträgt.

Die Gesamtschichtdicke von der inneren Schicht 10 und der äußeren Schicht 13 beträgt vorzugsweise 300µm oder vorzugsweise 450µm. Die maximale Gesamtschichtdicke beträgt vorteilhafterweise 800µm oder vorzugsweise maximal 600µm.

Figur 3 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaüfelplattform 403 sowie ein Schaufelblatt 406 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind Teil der Offenbarung.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrA1X kann noch eine erfindungsgemäße keramische Wärmedämmschicht 13 vorhanden sein.
Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

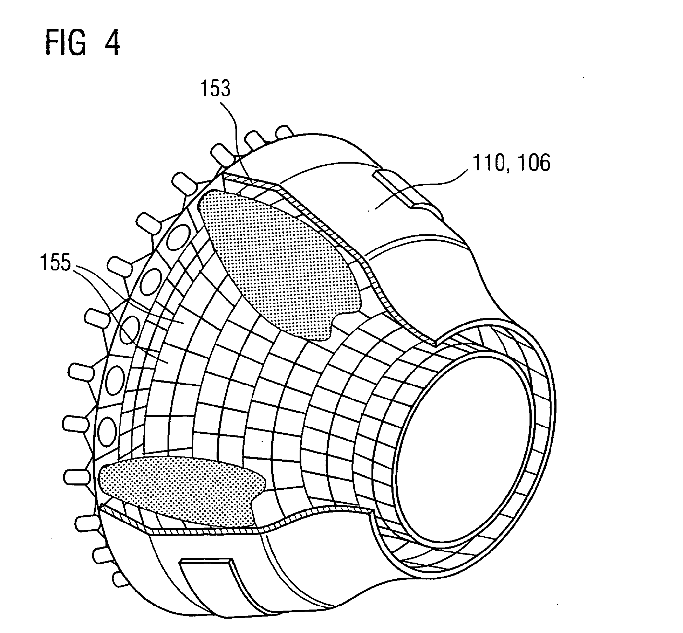

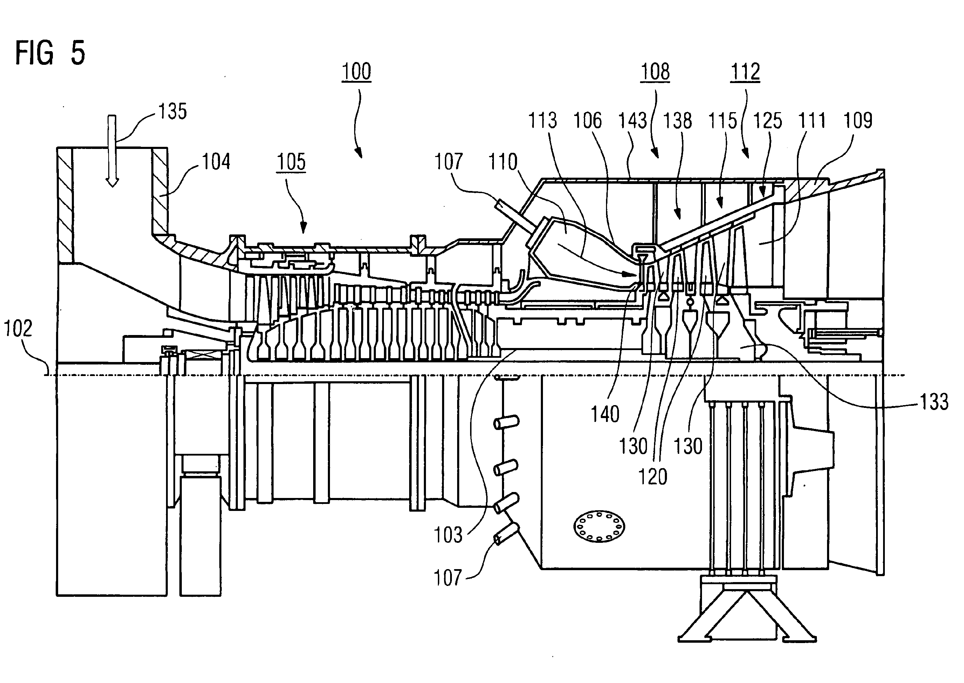

Die Figur 4 zeigt eine Brennkammer 110 einer Gasturbine 100 (Fig. 5).
Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.
Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrA1X: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Filmkühllöcher (nicht dargestellt) auf.

Die Figur 5 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

## Patentansprüche

1. Schichtsystem für Kurzzeiteinsatz,
aufweisend
ein Substrat (4),
das eine nickel- oder kobaltbasierte Superlegierung aufweist,
eine metallische Anbindungsschicht (7) auf dem Substrat (4),
die (7) eine NiCoCrAlX-Legierung aufweist, eine innere stabilisierte Zirkonoxidschicht keramische Schicht (10) auf der metallischen Anbindungsschicht (7) oder auf dem Substrat (4),
wobei auf der inneren keramischen Schicht (10) eine äußere keramische Schicht (13) vorhanden ist,
die (13) höchstens 40% der Gesamtschichtdicke der inneren Schicht (10) und der äußeren Schicht (13) aufweist, und die (13) zumindest 92wt%
eine Pyrochlorphase aufweist.

2. Schichtsystem nach Anspruch 1,
das als Pyrochlorphase Gadoliniumzirkonat,
insbesondere Gd₂Zr₂O₇,
aufweist.

3. Schichtsystem nach Anspruch 1,
das als Pyrochlorphase Gadoliniumhafnat,
insbesondere Gd₂Hf₂O₇,
aufweist.

## Claims

1. Layer system for short-term use,
comprising
a substrate (4),
which comprises a nickel- or cobalt-based superalloy, a metallic bonding layer (7) on the substrate (4),
which (7) comprises an NiCoCrAlX alloy,
an inner stabilized ceramic zirconium oxide layer (10) on the metallic bonding layer (7) or on the substrate (4), wherein there is an outer ceramic layer (13) on the inner ceramic layer (10),
which (13) comprises at most 40% of the total layer thickness of the inner layer (10) plus the outer layer (13), and
which (13) comprises at least 92 wt% of a pyrochlore phase.

2. Layer system according to Claim 1,
which comprises gadolinium zirconate as a pyrochlore phase,
in particular Gd₂Zr₂O₇.

3. Layer system according to Claim 1,
which comprises gadolinium hafnate as a pyrochlore phase, in particular Gd₂Hf₂O₇.

## Revendications

1. Système de couche pour une utilisation de durée courte, comportant
un substrat ( 4 ),
qui comporte un superalliage à base de nickel ou de cobalt, une couche ( 7 ) métallique de liaison sur le substrat ( 4 ),
qui ( 7 ) comporte un alliage en NiCoCrAlx, une couche ( 10 ) intérieure en céramique [couche d'oxyde de zirconium stabilisé] sur la couche métallique de liaison ou sur le substrat ( 4 ) ;
dans lequel il y a, sur la couche ( 10 ) intérieure en céramique, une couche ( 13 ) extérieure en céramique,
qui ( 13 ) représente au plus 40% de l'épaisseur totale de la couche ( 10 ) intérieure et de la couche ( 13 ) extérieure, et qui ( 13 ) a, pour au moins 92% en poids, une phase pyrochlore.

2. Système de couche suivant la revendication 1,
qui comporte comme phase pyrochlore du zirconate de gadolinium,
notamment du Gd₂Zr₂O₇.

3. Système de couche suivant la revendication 1,
qui comporte comme phase pyrochlore de l'hafnate de gadolinium,
notamment du Gd₂Hf₂O₇.
